# EUROPEAN PATENT APPLICATION

(11) **EP 4 131 594 A1**
(43) Date of publication of application: **08.02.2023**
(21) Application number: 21774305.3
(22) Date of filing: 17.03.2021
(51) Int. Cl.: H01M 50/183, H01G 4/224, H01G 4/32, H01G 11/80, H01G 11/84, H01G 13/00, H01M 50/543

(54) **ELECTRODE BODY, METHOD FOR MANUFACTURING ELECTRODE BODY, AND ELECTROCHEMICAL ELEMENT**

(30) Priority: 25.03.2020 JP 2020054820
(71) Applicant: Showa Denko K.K., Tokyo 105-8518 (JP)
(72) Inventor: TAKAHASHI, Nobuyuki, Tokyo 105-8518 (JP); OTANI, Kazuo, Tokyo 105-8518 (JP)
(74) Representative: Strehl Schübel-Hopf & Partner
(86) International application number: PCT/JP2021/010739
(87) International publication number: WO 2021/193267

(57) **Abstract**

An electrode body having an electrode, and a primer layer or a plurality of primer layers laminated on the electrode, wherein the at least one primer layer is an in-situ polymerizable composition layer formed from a polymerization product of an in-situ polymerizable composition, a method for producing an electrode body, and an electrochemical element.

## Description

### Technical Field

The present invention relates to an electrode body, a method for producing an electrode body, and an electrochemical element.

### Background Art

Electrochemical elements, such as a non-aqueous electrolyte secondary battery, an electrical double layer capacitor, and a fuel cell, have a construction having at least an electrolyte and an electrode body in an outer container. A capacitor has a construction having at least an insulator and an electrode body in an outer container. In the electrode body, for permitting electricity to go outside and inside, a positive electrode and a negative electrode generally extend from the outer container, and the outer container has formed therein a through-hole through which these electrodes extend from the container. Meanwhile, in many electrochemical elements, for preventing the electrolyte from volatilizing or from suffering a problem, such as a change of properties due to the air, it is necessary to isolate the electrolyte from the air.

For isolating the electrolyte from the air, for example, a method is employed in which, using an insulating member formed from a resin material, such as an O-ring, as a sealing material, a gap between the electrode body and the through-hole is sealed. Further, from the viewpoint of the simple and easy method, for example, a technique for sealing the surrounding of a metal electrode by insert molding, such as injection molding, using a resin material constituting a sealing material has been known. Therefore, the development of a technique for improving the properties of joining of a metal electrode body and a resin is being made (for example, PTLs 1 to 4).

### Citation List

### Patent Literature

PTL 1: JP 2019-119914 A
PTL 2: JP 2019-098710 A
PTL 3: JP 2019-048407 A
PTL 4: JP 2009-144198 A

### Summary of Invention

### Technical Problem

As mentioned above, the techniques for isolating the electrolyte from the air described in the above-shown patent documents and the like have been known. However, for further surely achieving the sealing properties, the electrode body and the sealing material are required to more firmly adhere to each other, and the conventional techniques cannot meet the requirement satisfactorily.

Accordingly, a task of the present invention is to provide an electrode body having excellent adhesion to a sealing material, a method for producing an electrode body, and an electrochemical element.

### Solution to Problem

The present inventors have conducted extensive and intensive studies with a view toward solving the above-mentioned problems, and, as a result, they have achieved the present invention described below, and have found that the problems can be solved.

Specifically, the present invention is as follows.

### <Electrode body>

[1] An electrode body having an electrode, and a primer layer or a plurality of primer layers laminated on the electrode,
   wherein the at least one primer layer is an in-situ polymerizable composition layer formed from a polymerization product of an in-situ polymerizable composition.
[2] The electrode body according to item [1] above, wherein the in-situ polymerizable composition contains at least one member of the following (1) to (7):
   (1) a combination of a difunctional isocyanate compound and a diol,
   (2) a combination of a difunctional isocyanate compound and a difunctional amino compound,
   (3) a combination of a difunctional isocyanate compound and a difunctional thiol compound,
   (4) a combination of a difunctional epoxy compound and a diol,
   (5) a combination of a difunctional epoxy compound and a difunctional carboxy compound,
   (6) a combination of a difunctional epoxy compound and a difunctional thiol compound, and
   (7) a monofunctional radical-polymerizable monomer.
[3] The electrode body according to item [1] or [2] above, which has a functional group-containing layer between the electrode and the primer layer,
   wherein the functional group-containing layer contains at least one functional group selected from the group consisting of the following (a) to (g):
   (a) at least one functional group which is derived from a silane coupling agent, and which is selected from the group consisting of an epoxy group, an amino group, a (meth)acryloyl group, and a mercapto group,
   (b) a functional group obtained by reacting at least one member selected from an epoxy compound and a thiol compound with an amino group derived from a silane coupling agent,
   (c) a functional group obtained by reacting at least one member selected from the group consisting of an epoxy compound, an amino compound, an isocyanate compound, a compound having a (meth)acryloyl group and an epoxy group, and a compound having a (meth)acryloyl group and an amino group with a mercapto group derived from a silane coupling agent,
   (d) a functional group obtained by reacting a thiol compound with a (meth)acryloyl group derived from a silane coupling agent,
   (e) a functional group obtained by reacting at least one member selected from the group consisting of a compound having an amino group and a (meth)acryloyl group, an amino compound, and a thiol compound with an epoxy group derived from a silane coupling agent,
   (f) an isocyanato group derived from an isocyanate compound, and
   (g) a mercapto group derived from a thiol compound.
[4] The electrode body according to any one of items [1] to [3] above, wherein the primer layer or layers have a total thickness of 1 to 500 µm.
[5] The electrode body according to any one of items [1] to [4] above, wherein the electrode is a metal electrode.

### <Method for producing an electrode body>

[6] A method for producing an electrode body having an electrode and a primer layer or a plurality of primer layers laminated on the electrode,
   the method including the step of applying an in-situ polymerizable composition onto the electrode and subjecting the in-situ polymerizable composition to polymerization to form the primer layer or layers.
[7] A method for producing an electrode body, the method including the step of forming a functional group-containing layer on an electrode, and the step of applying an in-situ polymerizable composition onto the functional group-containing layer and subjecting the in-situ polymerizable composition to polymerization to form a primer layer or a plurality of primer layers, wherein the functional group-containing layer contains at least one functional group selected from the group consisting of the following (a) to (g):
   (a) at least one functional group which is derived from a silane coupling agent, and which is selected from the group consisting of an epoxy group, an amino group, a (meth)acryloyl group, and a mercapto group,
   (b) a functional group obtained by reacting at least one member selected from an epoxy compound and a thiol compound with an amino group derived from a silane coupling agent,
   (c) a functional group obtained by reacting at least one member selected from the group consisting of an epoxy compound, an amino compound, an isocyanate compound, a compound having a (meth)acryloyl group and an epoxy group, and a compound having a (meth)acryloyl group and an amino group with a mercapto group derived from a silane coupling agent,
   (d) a functional group obtained by reacting a thiol compound with a (meth)acryloyl group derived from a silane coupling agent,
   (e) a functional group obtained by reacting at least one member selected from the group consisting of a compound having an amino group and a (meth)acryloyl group, an amino compound, and a thiol compound with an epoxy group derived from a silane coupling agent,
   (f) an isocyanato group derived from an isocyanate compound, and
   (g) a mercapto group derived from a thiol compound.
[8] The method for producing an electrode body according to item [6] or [7] above, wherein the in-situ polymerizable composition contains at least one member of the following (1) to (7):
   (1) a combination of a difunctional isocyanate compound and a diol,
   (2) a combination of a difunctional isocyanate compound and a difunctional amino compound,
   (3) a combination of a difunctional isocyanate compound and a difunctional thiol compound,
   (4) a combination of a difunctional epoxy compound and a diol,
   (5) a combination of a difunctional epoxy compound and a difunctional carboxy compound,
   (6) a combination of a difunctional epoxy compound and a difunctional thiol compound, and
   (7) a monofunctional radical-polymerizable monomer.
[9] The method for producing an electrode body according to any one of items [6] to [8] above, wherein the primer layer or layers have a total thickness of 1 to 500 µm.
[10] The method for producing an electrode body according to any one of items [6] to [9] above, wherein the electrode is a metal electrode.

### <Electrochemical element>

[11] An electrochemical element having the electrode body according to any one of items [1] to [5] above.
[12] The electrochemical element according to item [11] above, which has contained in a container one of an electrolyte and an insulator, and the electrode body,
   the container having a through-hole through which the electrode body passes,
   wherein part of the electrode body extends through the through-hole to the outside of the container,
   the container having a sealing material along an edge of the through-hole,
   wherein a sealing portion at which the sealing material and the primer layer of the electrode body are joined seals a gap between the through-hole and the electrode body.
[13] The electrochemical element according to item [12] above, wherein the sealing material has undergone a heating melt process to be joined to at least part of the primer layer of the electrode body.
[14] The electrochemical element according to item [12] or [13] above, wherein the sealing material is a thermoplastic resin.
[15] The electrochemical element according to any one of items [11] to [14] above, which is a wet secondary battery, a solid battery, or a capacitor. Advantageous Effects of Invention

By the present invention, there can be provided an electrode body having excellent adhesion to a sealing material, a method for producing an electrode body, and an electrochemical element.

### Brief Description of Drawings

Fig. 1 is a front view showing an example of an embodiment of an electrode body.
Fig. 2 is a cross-sectional view taken along the line B-B' in Fig. 1.
Fig. 3 is a cross-sectional view taken along the line A-A' in Fig. 1.
Fig. 4 is an explanatory view showing an example of the construction of a primer layer, which is an enlarged view of the portion of the broken line S of Fig. 3.
Fig. 5 is an explanatory view showing an example of the construction of the primer layer, which is an enlarged view of the portion of the broken line S of Fig. 3.
Fig. 6 is an explanatory view showing an example of the construction of the primer layer and a functional group-containing layer, which is an enlarged view of the portion of the broken line S of Fig. 3.
Fig. 7 is an explanatory cross-sectional view showing an example of an embodiment of an electrochemical element.

### Description of Embodiments

Hereinbelow, the present invention will be described with reference to an example of the embodiment. The embodiments described below are examples for embodying the technical idea of the present invention, and the following description should not be construed as limiting the scope of the present invention.

Further, in the present specification, a preferred mode of the embodiment is shown, and a combination of two or more preferred modes is also a preferred mode. With respect to the matter indicated by the range of values, when several ranges of values are shown, the range of values expressed using a combination of the lower limit and the upper limit which are selected from those of the several ranges can be a preferred mode.

In the present specification, the expression "XX to YY" for the range of values means "XX or more and YY or less".

### <Electrode body>

In the present invention, the electrode body has an electrode, and a primer layer or a plurality of primer layers laminated on the electrode, wherein the at least one primer layer is an in-situ polymerizable composition layer formed from a polymerization product of an in-situ polymerizable composition.

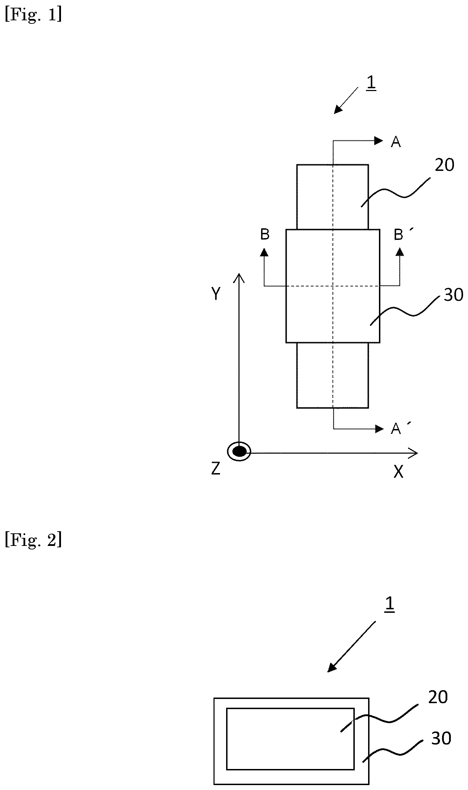

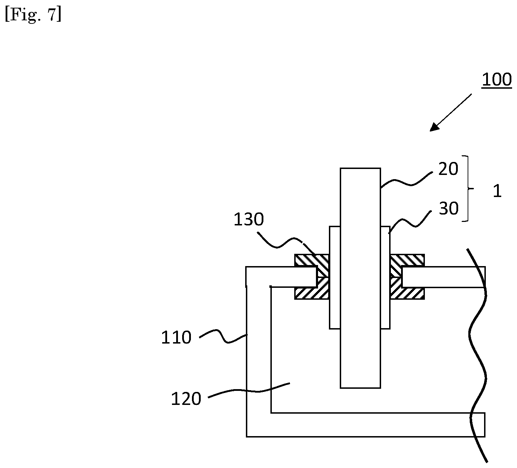

An example of the embodiment of the electrode body is described with reference to Figs. 1 and 2. As shown in Fig. 1, a primer layer 30 can be laminated on at least part of an electrode 20. For example, as shown in Fig. 7, it is preferred that the primer layer 30 is laminated on an area larger than the area of contact with a sealing material 130.

Further, from the viewpoint of improving the sealing properties for the sealing material, as shown in Fig. 2, it is preferred that the primer layer 30 is laminated so as to continuously cover the surrounding of the electrode 20.

### [Electrode]

With respect to the shape of the electrode, there is no particular limitation, and examples include a plate shape, a cylinder shape, and a prism shape.

As an electrode material for the electrode, a known electrode material can be used, and examples include a metal, a conductive polymer, and a carbon material. The electrode materials can be used individually or in combination.

Examples of the metals include lithium, sodium, potassium, rubidium, cesium, magnesium, calcium, strontium, barium, aluminum, scandium, vanadium, copper, zinc, yttrium, indium, cerium, samarium, europium, terbium, and ytterbium, and the metal can be an alloy of two or more of the above metals or an alloy of the above metal and another metal.

Examples of the conductive polymers include polythiophene, polypyrrole, polyaniline, polyacetylene, polyphenylene, poly(p-phenylene-vinylene), polyacene, polythiophenevinylene, and a derivative thereof. These can be used individually or in combination.

Examples of the carbon materials include a carbon fiber, carbon black, a carbon nanofiber, a carbon nanotube, and graphite. These can be used individually or in combination.

Of these, from the viewpoint of the conductivity, a metal electrode is preferred.

### (Surface treatment)

The electrode can be subjected to surface treatment for the purpose of removal of contaminants on the surface and/or an anchor effect.

Especially, the metal electrode is preferably subjected to surface treatment before laminating a primer layer.

Examples of surface treatments include cleaning with a solvent or the like, a degreasing treatment, a blast treatment, an abrasion treatment, a plasma treatment, a corona discharge treatment, a laser treatment, an etching treatment, and a chemical conversion treatment, and a surface treatment for causing a hydroxy group to be generated on the surface of the metal electrode is preferred. A single type of or two or more types of the above surface treatments can be used. As a specific method for the above surface treatment, a known method can be used.

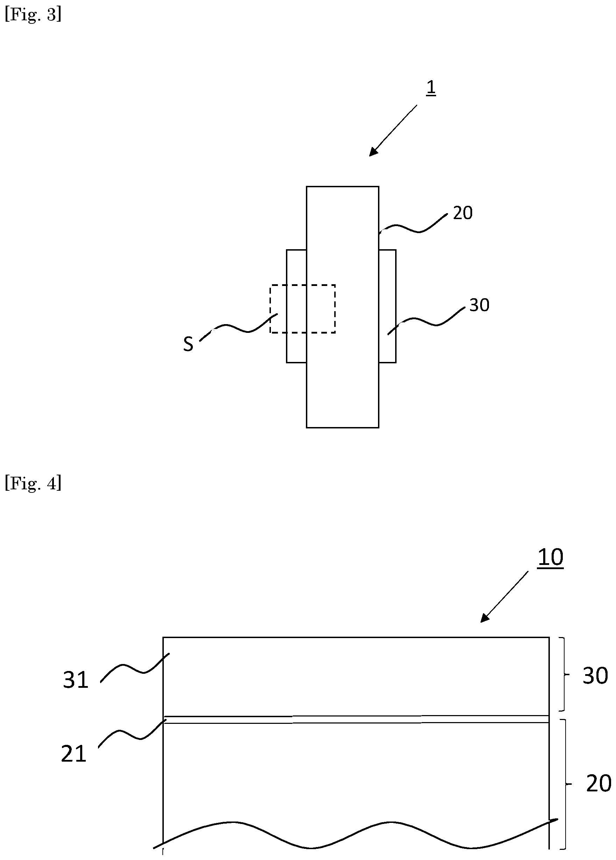

For the purpose of removal of contaminants on the surface of the metal electrode and/or an anchor effect, as shown in Fig. 4, the above-mentioned surface treatment can form very fine unevenness 21 in the surface of the metal electrode to roughen the surface. Such a surface treatment can improve the adhesion between the surface of the metal electrode and the primer layer, and is able to contribute to an improvement of the joining properties with the below-mentioned sealing material.

As examples of the cleaning with a solvent or the like and/or the degreasing treatment, there can be mentioned a treatment in which the surface of the metal electrode is degreased using an organic solvent, such as acetone or toluene. The cleaning with a solvent or the like and/or the degreasing treatment is preferably conducted before the other surface treatment.

Examples of the blast treatments include shot blasting and sandblasting.

Examples of the abrasion treatments include buffing using an abrasive cloth, roll grinding using abrasive paper (sandpaper), and electrolytic polishing.

The plasma treatment is a method in which, using a plasma treatment high-voltage power source, a plasma beam from a rod first strikes the surface of the metal electrode to clean the foreign matter oil film present on the surface, and gas energy appropriately selected according to the material is charged to excite molecules on the surface, and examples include an atmospheric pressure plasma treatment method which is capable of imparting a hydroxy group or a polar group to the surface.

As an example of the corona discharge treatment, there can be mentioned a method which is conducted for surface modification of a polymer film. The above-mentioned method is a method in which electrons emitted from an electrode cut the polymer main chain or side chain in the polymer surface layer to generate radicals, and the radicals serve as a starting point to generate a hydroxy group or a polar group on the surface.

The laser treatment is a technique of quickly heating only the surface layer of a metal electrode by laser irradiation and cooling the surface to improve the properties of the surface, which is a method effective in roughening the surface. A known laser treatment technique can be used.

Examples of the etching treatments include chemical etching treatments, such as an alkaline method, a phosphoric acid-sulfuric acid method, a fluoride method, a chromic acid-sulfuric acid method, and an iron chloride method, and electrochemical etching treatments, such as an electrolytic etching method.

When the metal electrode is aluminum, the etching treatment is preferably an alkaline method using an aqueous sodium hydroxide solution or an aqueous potassium hydroxide solution, especially preferably a caustic soda method using an aqueous sodium hydroxide solution. The alkaline method can be conducted by, for example, immersing aluminum which is a metal material in an aqueous solution of sodium hydroxide or potassium hydroxide having a concentration of 3 to 20% by mass at 20 to 70°C for 1 to 15 minutes. As an additive, a chelating agent, an oxidizing agent, a phosphoric acid salt, or the like can be added. It is preferred that, after being immersed, the aluminum is neutralized (desmutted) using a 5 to 20% by mass aqueous solution of nitric acid or the like, and washed with water and dried.

The chemical conversion treatment is a treatment for forming a chemical conversion film mainly on the surface of a metal electrode. Examples of chemical conversion treatments include a boehmite treatment and a zirconium treatment.

In the boehmite treatment, when the metal electrode is aluminum, the aluminum is treated with hot water, so that a boehmite film is formed on the surface of the aluminum. As a reaction accelerator, ammonia, triethanolamine, or the like can be added to the water. For example, it is preferred that the aluminum is immersed in hot water, which contains triethanolamine at a concentration of 0.1 to 5.0% by mass, at 90 to 100°C for 3 seconds to 5 minutes.

In the zirconium treatment, when the metal electrode is aluminum, the aluminum is immersed in, for example, a solution containing a zirconium salt, such as zirconium phosphate, so that a film of a zirconium compound is formed on the surface of the aluminum. For example, it is preferred that the aluminum is immersed in a solution of a chemical agent for zirconium treatment (for example, "Parcoat 3762" or "Parcoat 3796", each of which is manufactured by Nihon Parkerizing Co., Ltd.) at 45 to 70°C for 0.5 to 3 minutes. The zirconium treatment is preferably conducted after the etching treatment according to the caustic soda method.

When the electrode material is a conductive polymer, the plasma treatment, corona discharge treatment, or the like can be used as a surface treatment.

When the electrode material is a carbon material, the plasma treatment, corona discharge treatment, or the like can be used as a surface treatment.

### [Primer layer]

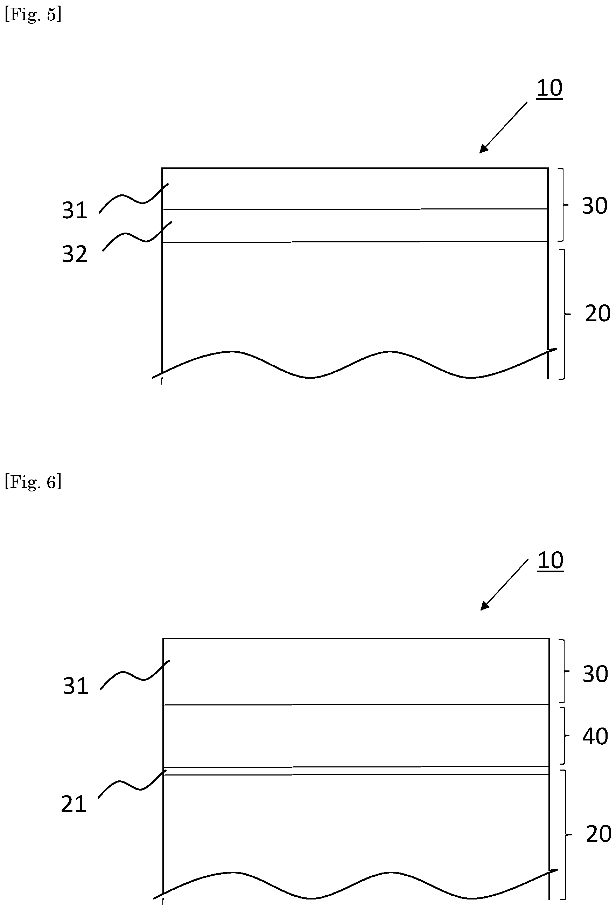

An example of the embodiment of the primer layer is described with reference to Figs. 3 to 5. Fig. 3 is a cross-sectional view that corresponds to the cut area taken on A-A' line parallel to the Y axis for the electrode body shown in Fig. 1. Figs. 4 and 5 are explanatory views showing examples of the construction of the primer layer, which are enlarged views of the portion of the broken line S of Fig. 3. As shown in Figs. 4 and 5, the primer layer 30 is composed of one layer or a plurality of layers. The at least one primer layer 30 is an in-situ polymerizable composition layer 31 formed from a polymerization product of an in-situ polymerizable composition. When the primer layer 30 is composed of a plurality of layers, as shown in Fig. 5, the primer layer 30 can have a thermosetting resin layer 32 formed from a cured product of a resin composition containing a thermosetting resin.

In the embodiment of the above-mentioned electrode body, by virtue of having the primer layer, the electrode body has excellent adhesion to a sealing material. For example, when the electrode body is used in the below-mentioned electrochemical element, there is an embodiment in which a gap between a through-hole through which the electrode body passes and the electrode body is sealed by a sealing material. In this case, the sealing material and the primer layer of the electrode body are joined and unified to form a sealing portion. Thus, when the primer layer is present between the electrode and the sealing material, the joining strength is improved, so that further more excellent adhesion between the sealing material and the electrode body can be achieved, and further such excellent adhesion can be expected to be maintained.

### [In-situ polymerizable composition layer]

In the present invention, the in-situ polymerizable composition means a resin composition which forms a thermoplastic structure, i.e., a linear polymer structure by conducting a polyaddition reaction of a combination of difunctional compounds having reactivity or a radical polymerization reaction of a specific monofunctional monomer in situ, namely, on a material. Therefore, in the present invention, the "in-situ polymerizable composition layer" is a layer formed from a polymerization product of the in-situ polymerizable composition, which is formed by conducting a polyaddition reaction or radical polymerization reaction of the in-situ polymerizable composition on the electrode (or the below-mentioned functional group-containing layer). On the other hand, a layer formed by laminating a polymerization product, which is obtained by preliminarily completing polymerization of the in-situ polymerizable composition, on the electrode (or the below-mentioned functional group-containing layer) is not the "in-situ polymerizable composition layer" in the present invention.

The in-situ polymerizable composition is different from a thermosetting resin constituting a three-dimensional network having a crosslinked structure, and does not constitute a three-dimensional network having a crosslinked structure but has thermoplasticity.

The in-situ polymerizable composition layer 31 is preferably a layer formed from a resin composition containing an in-situ polymerizable phenoxy resin. The in-situ polymerizable phenoxy resin is a resin called a thermoplastic epoxy resin, an in-situ curable phenoxy resin, an in-situ curable epoxy resin, or the like. Further, with respect to the in-situ polymerizable phenoxy resin, a difunctional epoxy resin and a difunctional phenolic compound undergo a polyaddition reaction in the presence of a catalyst to form a thermoplastic structure, i.e., a linear polymer structure.

The in-situ polymerizable composition layer 31 can be obtained by applying the in-situ polymerizable composition onto the electrode 20 or a below-mentioned functional group-containing layer 40 formed on the electrode 20 and subjecting the in-situ polymerizable composition to polymerization. The in-situ polymerizable composition can be used in the form of being dissolved in a solvent. In this case, the solvent on the electrode is permitted to volatilize, and then polymerization is conducted. When the in-situ polymerizable composition itself is in a liquid state, a solvent is not necessarily used. With respect to the method for applying the in-situ polymerizable composition to the electrode, there is no particular limitation, but examples include a spray coating method and an immersion method.

The in-situ polymerizable composition preferably contains at least one member of the (1) to (7) below, more preferably contains the (4) below, further preferably contains a combination of a difunctional epoxy resin and a difunctional phenolic compound. The content of at least one member of the following (1) to (7) in the in-situ polymerizable composition can be, for example, 70 to 100% by mass, can be 80 to 100% by mass, or can be 90 to 100% by mass:
(1) a combination of a difunctional isocyanate compound and a diol,
(2) a combination of a difunctional isocyanate compound and a difunctional amino compound,
(3) a combination of a difunctional isocyanate compound and a difunctional thiol compound,
(4) a combination of a difunctional epoxy compound and a diol,
(5) a combination of a difunctional epoxy compound and a difunctional carboxy compound,
(6) a combination of a difunctional epoxy compound and a difunctional thiol compound, and
(7) a monofunctional radical-polymerizable monomer.

The ratio of the amounts of the difunctional isocyanate compound and diol incorporated in (1) is preferably set so that the molar equivalent ratio of the isocyanate group to the hydroxy group becomes 0.7 to 1.5, more preferably 0.8 to 1.4, further preferably 0.9 to 1.3.

The ratio of the amounts of the difunctional isocyanate compound and difunctional amino compound incorporated in (2) is preferably set so that the molar equivalent ratio of the isocyanate group to the amino group becomes 0.7 to 1.5, more preferably 0.8 to 1.4, further preferably 0.9 to 1.3.

The ratio of the amounts of the difunctional isocyanate compound and difunctional thiol compound incorporated in (3) is preferably set so that the molar equivalent ratio of the isocyanate group to the mercapto group becomes 0.7 to 1.5, more preferably 0.8 to 1.4, further preferably 0.9 to 1.3.

The ratio of the amounts of the difunctional epoxy compound and diol incorporated in (4) is preferably set so that the molar equivalent ratio of the epoxy group to the hydroxy group becomes 0.7 to 1.5, more preferably 0.8 to 1.4, further preferably 0.9 to 1.3.

The ratio of the amounts of the difunctional epoxy compound and difunctional carboxy compound incorporated in (5) is preferably set so that the molar equivalent ratio of the epoxy group to the carboxy group becomes 0.7 to 1.5, more preferably 0.8 to 1.4, further preferably 0.9 to 1.3.

The ratio of the amounts of the difunctional epoxy compound and difunctional thiol compound incorporated in (6) is preferably set so that the molar equivalent ratio of the epoxy group to the mercapto group becomes 0.7 to 1.5, more preferably 0.8 to 1.4, further preferably 0.9 to 1.3.

As an example of the in-situ polymerizable composition, there can be mentioned a resin composition containing at least one member of the (1) to (7) above. For example, the in-situ polymerizable composition can be a resin composition containing at least one member of the (1), (4), (6), and (7) above.

When the in-situ polymerizable composition layer 31 as the primer layer 30 is laminated on the electrode 20, the electrode body and the sealing material can be firmly joined and unified.

Further, as mentioned above, the primer layer 30 can be composed of a plurality of layers including the in-situ polymerizable composition layer 31. When the primer layer 30 is composed of a plurality of layers, as shown in Fig. 5, it is preferred that the layers are laminated so that the in-situ polymerizable composition layer 31 which is essential constitutes the outermost surface on the side opposite to the electrode 20. When the in-situ polymerizable composition layer constitutes the outermost surface of the primer layer, the in-situ polymerizable composition layer can be directly in contact with the below-mentioned sealing material, so that the electrode body and the sealing material can be further more firmly joined and unified.

In an embodiment, the in-situ polymerizable composition layer 31 can be obtained by subjecting a resin composition containing at least one member of the (1) to (6) above to polyaddition reaction in the presence of a catalyst. As a catalyst for the polyaddition reaction, for example, a tertiary amine, such as triethylamine or 2,4,6-tris(dimethylaminomethyl)phenol, or a phosphorus compound, such as triphenylphosphine, is preferably used. The polyaddition reaction is preferably conducted, depending on the formulation of the resin composition, by heating at ordinary room temperature to 200°C for 5 to 120 minutes.

Specifically, for example, the in-situ polymerizable composition layer 31 can be formed as follows. A resin composition containing at least one member of the (1) to (6) above is dissolved in a solvent and applied to the electrode 20, and then the solvent is appropriately allowed to volatilize, and then the resultant composition is heated to cause a polyaddition reaction, forming an in-situ polymerizable composition layer firmly bonded to the electrode. The electrode 20 includes one which has been subjected to the above-mentioned surface treatment. The in-situ polymerizable composition layer 31 can be directly laminated on the electrode 20, or can be directly laminated on the surface-treated electrode. Further, the in-situ polymerizable composition layer 31 can be formed as follows. A resin composition containing at least one member of the (1) to (6) above is dissolved in a solvent and applied to the below-mentioned functional group-containing layer 40 formed on the electrode 20 as shown in Fig. 6, and then the solvent is appropriately allowed to volatilize, and then the resultant composition is heated to cause a polyaddition reaction, forming an in-situ polymerizable composition layer firmly bonded to the electrode. The in-situ polymerizable composition layer 31 can be directly laminated on the functional group-containing layer 40.

The in-situ polymerizable composition layer 31 can be obtained by a radical polymerization reaction of a resin composition containing the monofunctional radical-polymerizable monomer of (7) above. The radical polymerization reaction is preferably conducted, depending on the formulation of the resin composition, by heating at ordinary room temperature to 200°C for 5 to 90 minutes. In the case of photo-curing, the polymerization reaction is preferably conducted by irradiation with an ultraviolet light or a visible light.

Specifically, for example, the in-situ polymerizable composition layer 31 can be formed as follows. A resin composition containing the monofunctional radical-polymerizable monomer of (7) above is, if necessary, dissolved in a solvent and applied to the electrode 20, and then heated or irradiated with a light to cause a radical polymerization reaction, forming an in-situ polymerizable composition layer firmly bonded to the electrode. The electrode 20 includes one which has been subjected to the above-mentioned surface treatment. The in-situ polymerizable composition layer 31 can be directly laminated on the electrode 20, or can be directly laminated on the surface-treated electrode. Further, the in-situ polymerizable composition layer 31 can be formed as follows. A resin composition containing the monofunctional radical-polymerizable monomer of (7) above is dissolved in a solvent and applied to the below-mentioned functional group-containing layer 40 formed on the electrode 20 as shown in Fig. 6, and then the solvent is appropriately allowed to volatilize, and then the resultant composition is heated to cause a polyaddition reaction, forming an in-situ polymerizable composition layer firmly bonded to the electrode. The in-situ polymerizable composition layer 31 can be directly laminated on the functional group-containing layer 40.

### (Difunctional isocyanate compound)

The difunctional isocyanate compound is a compound having two isocyanato groups, and examples include diisocyanate compounds, such as hexamethylene diisocyanate, tetramethylene diisocyanate, dimer acid diisocyanate, 2,4- or 2,6-tolylene diisocyanate (TDI) or a mixture thereof, p-phenylene diisocyanate, xylylene diisocyanate, and diphenylmethane diisocyanate (MDI). Of these, from the viewpoint of the strength of the primer layer, TDI, MDI, and the like are preferred.

### (Diol)

The diol is a compound having two hydroxy groups, and examples include aliphatic glycols and difunctional phenols.

Examples of aliphatic glycols include ethylene glycol, propylene glycol, diethylene glycol, and 1,6-hexanediol. Examples of difunctional phenols include bisphenols, such as bisphenol A, bisphenol F, and bisphenol S.

From the viewpoint of the toughness of the primer layer, propylene glycol, diethylene glycol, and the like are preferred.

In (4) above, the diol used in combination with the difunctional epoxy compound is preferably a difunctional phenol, and the above-mentioned bisphenol is especially preferred.

### (Difunctional amino compound)

The difunctional amino compound is a compound having two amino groups, and examples include difunctional aliphatic diamines and aromatic diamines. Examples of aliphatic diamines include ethylenediamine, 1,2-propanediamine, 1,3-propanediamine, 1,4-diaminobutane, 1,6-hexamethylenediamine, 2,5-dimethyl-2,5-hexanediamine, 2,2,4-trimethylhexamethylenediamine, isophoronediamine, bis(4-amino-3-methylcyclohexyl)methane, 1,3-diaminocyclohexane, and N-aminoethylpiperazine. Examples of aromatic diamines include diaminodiphenylmethane and diaminodiphenylpropane. Of these, from the viewpoint of the toughness of the primer layer, 1,3-propanediamine, 1,4-diaminobutane, 1,6-hexamethylenediamine, and the like are preferred.

### (Difunctional thiol compound)

The difunctional thiol compound is a compound having two mercapto groups per molecule, and examples include 1,4-bis(3-mercaptobutylyloxy)butane which is a difunctional secondary thiol compound (for example, "Karenz MT (registered trademark) BD 1", manufactured by Showa Denko K.K.).

### (Difunctional epoxy compound)

The difunctional epoxy compound is a compound having two epoxy groups per molecule. Examples include aromatic epoxy resins, such as a bisphenol A epoxy resin, a bisphenol F epoxy resin, a bisphenol S epoxy resin, a biphenol epoxy resin, and a naphthalene difunctional epoxy resin, and aliphatic epoxy compounds, such as 1,6-hexanediol diglycidyl ether.

These can be used individually or in combination.

Specifically, there can be mentioned "jER (registered trademark) 828", "jER (registered trademark) 834", "jER (registered trademark) 1001", "jER (registered trademark) 1004", and "jER (registered trademark) YX-4000", each of which is manufactured by Mitsubishi Chemical Corporation, "EPICLON (registered trademark) 840", manufactured by DIC Corporation, and the like. Any other epoxy compounds of a special structure can be used as long as they are difunctional. These can be used individually or in combination.

### (Difunctional carboxy compound)

The difunctional carboxy compound can be a compound having two carboxy groups, and examples include oxalic acid, malonic acid, succinic acid, glutaric acid, adipic acid, maleic acid, fumaric acid, isophthalic acid, and terephthalic acid. Of these, from the viewpoint of the strength and toughness of the primer layer, isophthalic acid, terephthalic acid, adipic acid, and the like are preferred.

### (Monofunctional radical-polymerizable monomer)

The monofunctional radical-polymerizable monomer is a monomer having one ethylenically unsaturated bond. Examples include styrene monomers, such as a styrene monomer, α-, o-, m-, or p-alkyl, nitro, cyano, amide, or ester derivatives of styrene, chlorostyrene, vinyltoluene, and divinylbenzene; (meth)acrylic acid; and (meth)acrylates, such as ethyl (meth)acrylate, methyl (meth)acrylate, n-propyl (meth)acrylate, i-propyl (meth)acrylate, hexyl (meth)acrylate, 2-ethylhexyl (meth)acrylate, lauryl (meth)acrylate, dodecyl (meth)acrylate, cyclopentyl (meth)acrylate, cyclohexyl (meth)acrylate, tetrahydrofuryl (meth)acrylate, acetoacetoxyethyl (meth)acrylate, dicyclopentenyloxyethyl (meth)acrylate, phenoxyethyl (meth)acrylate, and glycidyl (meth)acrylate. These can be used individually or in combination. Of these, from the viewpoint of the strength and toughness of the primer layer, preferred is one of or a combination of two or more of styrene, (meth)acrylic acid, methyl (meth)acrylate, 2-ethylhexyl (meth)acrylate, and phenoxyethyl (meth)acrylate.

For permitting the radical polymerization reaction to satisfactorily proceed so as to form a desired primer layer, the radical polymerizable composition can contain a solvent and, if necessary, an additive, such as a coloring agent. In this case, it is preferred that, among the components of the radical polymerizable composition, except the solvent, the monofunctional radical-polymerizable monomer is a main component. The main component means that the monofunctional radical-polymerizable monomer content is 50 to 100% by mass. The monofunctional radical-polymerizable monomer content is preferably 60% by mass or more, more preferably 80% by mass or more.

As a polymerization initiator for the radical polymerization reaction, for example, a known organic peroxide or photoinitiator is preferably used. A room temperature radical polymerization initiator having a combination of an organic peroxide and a cobalt metal salt or an amine can be used. Examples of organic peroxides include those which are classified into a ketone peroxide, a peroxyketal, a hydroperoxide, a diallyl peroxide, a diacyl peroxide, a peroxy ester, and a peroxydicarbonate. With respect to the photoinitiator, one which is capable of initiating polymerization using a light with a wavelength of an ultraviolet light to a visible light is desirably used.

The radical polymerization reaction is preferably conducted, depending on the type of the reactant compound or the like, by heating at ordinary room temperature to 200°C for 5 to 90 minutes. In the case of photo-curing, the polymerization reaction is conducted by irradiation with an ultraviolet light or a visible light. Specifically, the in-situ polymerizable composition layer 31 composed of the radical polymerizable compound can be formed by applying the resin composition and then heating or irradiating the applied composition with a light to cause a radical polymerization reaction.

### [Thermosetting resin layer]

As shown in Fig. 5, when the primer layer 30 is composed of a plurality of layers including the in-situ polymerizable composition layer 31, the primer layer 30 can have the thermosetting resin layer 32 formed from a cured product of a resin composition containing a thermosetting resin.

For permitting the curing reaction of the thermosetting resin to satisfactorily proceed so as to form a desired primer layer, the resin composition containing the thermosetting resin can contain a solvent and, if necessary, an additive, such as a coloring agent. In this cease, it is preferred that, among the components of the resin composition, except the solvent, the thermosetting resin is a main component. The main component means that the thermosetting resin content is 40% by mass or more. The thermosetting resin content is preferably 60% by mass or more, more preferably 70% by mass or more, most preferably 80% by mass or more.

Examples of the thermosetting resins include an urethane resin, an epoxy resin, a vinyl ester resin, and an unsaturated polyester resin.

The thermosetting resin layer 32 can be formed from one of the above resins, or can be formed from a combination of two or more of the above resins. Alternatively, the thermosetting resin layer 32 can be composed of a plurality of layers, and the layers can be individually formed from resin compositions containing different types of thermosetting resins.

With respect to the coating method for forming the thermosetting resin layer 32 from a composition containing a monomer for the thermosetting resin, there is no particular limitation, but examples include a spray coating method and an immersion method.

The term "thermosetting resin" used in the present embodiment broadly means a resin which is crosslinkable and curable, and covers not only a resin of a heat-curing type but also a resin of a cold-setting type and a resin of a photo-setting type. The resin of a photo-setting type can be cured in a short time by irradiation with a visible light or an ultraviolet light. The resin of a photo-setting type and the resin of a heat-curing type and/or the resin of a cold-setting type can be used in combination. Examples of the resins of a photo-setting type include vinyl ester resins, such as "Ripox (registered trademark) LC-760", and "Ripox (registered trademark) LC-720", each of which is manufactured by Showa Denko K.K.

### (Urethane resin)

The urethane resin is generally a resin obtained by a reaction of an isocyanato group of an isocyanate compound and a hydroxy group of a polyol compound, and is preferably an urethane resin which corresponds to the "coating composition containing polyisocyanate and having a vehicle nonvolatile content of 10 wt% or more" defined in ASTM D16. The urethane resin may be of a one-pack type or of a two-pack type.

Examples of one-pack urethane resins include those of an oil-modified type (which are cured by oxidative polymerization of an unsaturated fatty acid group), those of a moisture-curing type (which are cured by a reaction of an isocyanato group and water in air), those of a block type (which are cured by a reaction of an isocyanato group and hydroxy group formed due to dissociation of a block agent by heating and regeneration), and those of a lacquer type (which are cured due to a phenomenon such that the solvent volatilizes to be dried). Of these, from the viewpoint of the easy handling and the like, a one-pack urethane resin of a moisture-curing type is preferably used. Specifically, there can be mentioned "UM-50P", manufactured by Showa Denko K.K.

Examples of two-pack urethane resins include those of a catalytic curing type (which are cured by a reaction of an isocyanato group and water in air or the like in the presence of a catalyst), and those of a polyol curing type (which are cured by a reaction of an isocyanato group and a hydroxy group of a polyol compound).

Examples of polyol compounds in the two-pack urethane resin of a polyol curing type include a polyester polyol, a polyether polyol, and a phenolic resin.

Examples of isocyanate compounds having an isocyanato group in the two-pack urethane resin of a polyol curing type include aliphatic isocyanates, such as hexamethylene diisocyanate (HDI), tetramethylene diisocyanate, and dimer acid diisocyanate; aromatic isocyanates, such as 2,4- or 2,6-tolylene diisocyanate (TDI) or a mixture thereof, p-phenylene diisocyanate, xylylene diisocyanate, diphenylmethane diisocyanate (MDI), and a polynuclear mixture thereof, e.g., polymeric MDI; and alicyclic isocyanates, such as isophorone diisocyanate (IPDI).

In the two-pack urethane resin of a polyol curing type, the ratio of the polyol compound and the isocyanate compound incorporated is preferably in the range of from 0.7 to 1.5, in terms of a hydroxy group/isocyanato group molar equivalent ratio.

Examples of urethane forming catalysts used in the two-pack urethane resin include amine catalysts, such as triethylenediamine, tetramethylguanidine, N,N,N',N'-tetramethylhexane-1,6-diamine, dimethyl ether amine, N,N,N',N",N"-pentamethyldipropylene-triamine, N-methylmorpholine, bis(2-dimethylaminoethyl) ether, and dimethylaminoethoxyethanol-triethylamine; and organotin catalysts, such as dibutyltin diacetate, dibutyltin dilaurate, dibutyltin thiocarboxylate, and dibutyltin dimaleate.

In the two-pack urethane resin of a polyol curing type, generally, it is preferred that the urethane forming catalyst is incorporated in an amount of 0.01 to 10 parts by mass, relative to 100 parts by mass of the polyol compound.

### (Epoxy resin)

The epoxy resin is a resin having at least two epoxy groups per molecule.

Examples of prepolymers which are the epoxy resin that is not cured include an ether bisphenol epoxy resin, a novolak epoxy resin, a polyphenol epoxy resin, an aliphatic epoxy resin, an ester aromatic epoxy resin, a cyclic aliphatic epoxy resin, and an ether-ester epoxy resin, and, of these, a bisphenol A epoxy resin is preferably used. These can be used individually or in combination.

As examples of bisphenol A epoxy resins, specifically, there can be mentioned "jER (registered trademark) 828" and "jER (registered trademark) 1001", each of which is manufactured by Mitsubishi Chemical Corporation.

As examples of novolak epoxy resins, specifically, there can be mentioned "D.E.N. (registered trademark) 438 (registered trademark)", manufactured by The Dow Chemical Company.

Examples of curing agents used in the epoxy resin include known curing agents, such as an aliphatic amine, an aromatic amine, an acid anhydride, a phenolic resin, a thiol, an imidazole, and a cationic catalyst. By using the above-mentioned curing agent and a long-chain aliphatic amine or/and a thiol in combination, effects of large elongation and excellent impact resistance can be obtained.

As specific examples of the thiols, there can be mentioned the same compounds as those mentioned as examples of the thiol compound for forming the below-mentioned functional group-containing layer. Of these, from the viewpoint of the elongation and impact resistance, pentaerythritol tetrakis(3-mercaptobutyrate) (for example, "Karenz MT (registered trademark) PE1", manufactured by Showa Denko K.K.) is preferred.

### (Vinyl ester resin)

The vinyl ester resin is a vinyl ester compound dissolved in a polymerizable monomer (for example, styrene). The vinyl ester resin is also called an epoxy (meth)acrylate resin, but includes an urethane (meth)acrylate resin.

With respect to the vinyl ester resin, one which is described in, for example, "Poriesuteru Jushi Handobukku (Polyester Resin Handbook)" (Nikkan Kogyo Shimbun Ltd., published in 1988) or "Toryou Yougo Jiten (Dictionary of Coating Terms)" (Japan Society of Color Material, published in 1993) can be used, and, specifically, there can be mentioned "Ripox (registered trademark) R-802", "Ripox (registered trademark) R-804", and "Ripox (registered trademark) R-806", each of which is manufactured by Showa Denko K.K., and the like.

With respect to the urethane (meth)acrylate resin, for example, there can be mentioned a radical-polymerizable unsaturated group-containing oligomer obtained by reacting an isocyanate compound and a polyol compound with each other, and then reacting the resultant product with a hydroxy group-containing (meth)acrylic monomer (and, if necessary, a hydroxy group-containing allyl ether monomer). Specifically, there can be mentioned "Ripox (registered trademark) R-6545", manufactured by Showa Denko K.K., and the like.

The vinyl ester resin can be cured by radical polymerization by heating in the presence of a catalyst, such as an organic peroxide.

With respect to the organic peroxide, there is no particular limitation, but examples include a ketone peroxide, a peroxyketal, a hydroperoxide, a diallyl peroxide, a diacyl peroxide, a peroxy ester, and a peroxydicarbonate. The use of the above organic peroxide and a cobalt metal salt or the like in combination enables curing at ordinary room temperature.

With respect to the cobalt metal salt, there is no particular limitation, but examples include cobalt naphthenate, cobalt octylate, and cobalt hydroxide. Of these, cobalt naphthenate or/and cobalt octylate are preferred.

### (Unsaturated polyester resin)

The unsaturated polyester resin is a condensation product (unsaturated polyester) of a polyol compound and an unsaturated polybasic acid (and, if necessary, a saturated polybasic acid) by an esterification reaction, which is dissolved in a polymerizable monomer (for example, styrene).

With respect to the unsaturated polyester resin, one which is described in, for example, "Poriesuteru Jushi Handobukku (Polyester Resin Handbook)" (Nikkan Kogyo Shimbun Ltd., published in 1988) or "Toryou Yougo Jiten (Dictionary of Coating Terms)" (Japan Society of Color Material, published in 1993) can be used, and, specifically, there can be mentioned "Rigolac (registered trademark)", manufactured by Showa Denko K.K., and the like.

The unsaturated polyester resin can be cured by radical polymerization due to heating in the presence of the same catalyst as mentioned above in connection with the vinyl ester resin.

### [Thickness of the primer layer]

From the viewpoint of causing the primer layer to easily exhibit excellent adhesion to the sealing material so that the sealing properties can be expected to be maintained, the primer layer preferably has a thickness of 1 to 500 µm. From the viewpoint of the adhesion, the thickness of the primer layer is more preferably more than 3 µm, further preferably 10 µm or more, still further preferably 20 µm or more. Further, from the viewpoint of the adhesion, the thickness of the primer layer is more preferably 400 µm or less, further preferably 300 µm or less, still further preferably 200 µm or less. When the thickness of the primer layer is smaller than the above preferred range, satisfactory compatibility of the primer with the sealing material cannot be obtained, and, when the thickness of the primer layer is larger than the above preferred range, a difference in the linear expansion between the primer layer and the sealing material is remarkable, so that the adhesion at high temperatures or low temperatures becomes poor.

When the primer layer is composed of one layer, the thickness of the primer layer means the thickness of the one layer, and, when the primer layer is composed of a plurality of layers, the thickness of the primer layer means the total thickness of the layers. Further, the thickness of the primer layer is the thickness of the primer layer after being dried.

When the primer layer is composed of a plurality of layers, the thickness of the in-situ polymerizable composition layer is preferably 10 to 95% of the thickness of the primer layer.

### [Functional group-containing layer]

The electrode body can have a functional group-containing layer. An example of the embodiment in which the electrode body has a functional group-containing layer is described with reference to Fig. 6. Fig. 6 is an explanatory view showing an example of the construction of the primer layer and functional group-containing layer, which is an enlarged view of the portion of the broken line S of Fig. 3. As shown in Fig. 6, the functional group-containing layer 40 can be formed between the electrode 20 and the primer layer 30.

The functional group-containing layer can be formed by subjecting the electrode to functional group-imparting treatment for imparting a functional group to the surface of the electrode. By the functional group-imparting treatment, one or a plurality of functional group-containing layers laminated in contact with the electrode and the primer layer can be formed between the electrode and the primer layer. Further, it is preferred that, before laminating the primer layer on the electrode, the electrode is subjected to surface treatment and subsequently subjected to functional group-imparting treatment.

When the functional group-containing layer is formed by a functional group-imparting treatment, an effect can be obtained such that chemical bonds formed due to reactions of the functional group of the functional group-containing layer with each of the hydroxy group on the surface of the electrode and the functional group of the resin constituting the primer layer improve the adhesion between the electrode and the primer layer. A further effect can be obtained such that the joining properties of the below-mentioned sealing material and the primer layer are improved. Therefore, the functional group in the functional group-containing layer is preferably a functional group having reactivity with the above-mentioned hydroxy group or functional group of the resin constituting the primer layer. Examples of the functional groups include an epoxy group, an amino group, a mercapto group, an isocyanato group, a carboxy group, a hydroxy group, a vinyl group, and a (meth)acryloyloxy group.

Specifically, it is preferred that the functional group-containing layer contains at least one functional group selected from the group consisting of the following (a) to (g):
(a) at least one functional group which is derived from a silane coupling agent, and which is selected from the group consisting of an epoxy group, an amino group, a (meth)acryloyl group, and a mercapto group,
(b) a functional group obtained by reacting at least one member selected from an epoxy compound and a thiol compound with an amino group derived from a silane coupling agent,
(c) a functional group obtained by reacting at least one member selected from the group consisting of an epoxy compound, an amino compound, an isocyanate compound, a compound having a (meth)acryloyl group and an epoxy group, and a compound having a (meth)acryloyl group and an amino group with a mercapto group derived from a silane coupling agent,
(d) a functional group obtained by reacting a thiol compound with a (meth)acryloyl group derived from a silane coupling agent,
(e) a functional group obtained by reacting at least one member selected from the group consisting of a compound having an amino group and a (meth)acryloyl group, an amino compound, and a thiol compound with an epoxy group derived from a silane coupling agent,
(f) an isocyanato group derived from an isocyanate compound, and
(g) a mercapto group derived from a thiol compound.

The functional group-containing layer is preferably a layer having a functional group introduced using at least one member selected from the group consisting of a silane coupling agent, an isocyanate compound, and a thiol compound.

For example, for forming the functional group-containing layer having the above-mentioned functional group, it is preferred that the electrode is subjected to functional group-imparting treatment using at least one member selected from the group consisting of the following (a') to (g'):
(a') a silane coupling agent containing at least one functional group selected from the group consisting of an epoxy group, an amino group, a (meth)acryloyl group, and a mercapto group,
(b') a combination of at least one member selected from an epoxy compound and a thiol compound, and a silane coupling agent having an amino group,
(c') a combination of at least one member selected from the group consisting of an epoxy compound, an amino compound, an isocyanate compound, a compound having a (meth)acryloyl group and an epoxy group, and a compound having a (meth)acryloyl group and an amino group, and a silane coupling agent having a mercapto group,
(d') a combination of a thiol compound and a silane coupling agent having a (meth)acryloyl group,
(e') a combination of at least one member selected from the group consisting of a compound having an amino group and a (meth)acryloyl group, an amino compound, and a thiol compound, and a silane coupling agent having an epoxy group,
(f') an isocyanate compound, and
(g') a thiol compound.

With respect to the method for forming the functional group-containing layer using a silane coupling agent, an isocyanate compound, or a thiol compound, there is no particular limitation, but examples include a spray coating method and an immersion method. Specifically, the formation of the functional group-containing layer can be conducted by a method in which the electrode is immersed in a solution of a silane coupling agent having a concentration of 5 to 50% by mass, or the like at ordinary room temperature to 100°C for one minute to 5 days, and then dried at ordinary room temperature to 100°C for one minute to 5 hours.

### (Silane coupling agent)

With respect to the silane coupling agent, for example, a known silane coupling agent used in a surface treatment for glass fiber or the like can be used. A silanol group formed by hydrolysis of a silane coupling agent, or a silanol group formed due to oligomerization of the silanol group formed by hydrolysis is reacted and bonded to a hydroxy group present on the surface-treated side of the electrode, so that a functional group which is based on the structure of the silane coupling agent and which is capable of chemically bonding to the primer layer can be imparted (introduced) to the electrode.

With respect to the silane coupling agent, there is no particular limitation, but examples of silane coupling agents having an epoxy group include 2-(3,4-epoxycyclohexyl)ethyltrimethoxysilane, 3-glycidoxypropylmethyltrimethoxysilane, 3-glycidoxypropylmethyldiethoxysilane, 3-glycidoxypropylmethyldiethoxysilane, and 3-glycidoxypropyltriethoxysilane. Examples of silane coupling agents having an amino group include N-2-(aminoethyl)-3-aminopropylmethyldimethoxysilane, N-2-(aminoethyl)-3-aminopropylmethyldimethoxysilane, N-2-(aminoethyl)-3-aminopropyltrimethoxysilane, 3-aminopropyltrimethoxysilane, and 3-aminopropyltriethoxysilane. Examples of silane coupling agents having a mercapto group include 3-mercaptopropylmethyldimethoxysilane and dithioltriazinepropyltriethoxysilane. Examples of silane coupling agents having a (meth)acryloyl group include 3-methacryloxypropylmethyldimethoxysilane, 3-methacryloxypropyltrimethoxysilane, 3-methacryloxypropylmethyldiethoxysilane, 3-methacryloxypropyltriethoxysilane, and 3-acryloxypropyltrimethoxysilane. Further, examples of other effective silane coupling agents include 3-isocyanatopropyltriethoxysilane, silane coupling agents having a vinyl group, such as vinyltrimethoxysilane, vinyltriethoxysilane, and p-styryltrimethoxysilane, 3-triethoxysilyl-N-(1,3-dimethyl-butylidene)propylamine, N-phenyl-3-aminopropyltrimethoxysilane, N-(vinylbenzyl)-2-aminopropyltrimethoxysilane hydrochloride, tris-(trimethoxysilylpropyl) isocyanurate, and 3-ureidopropyltrialkoxysilane. These can be used individually or in combination.

### (Isocyanate compound)

With respect to the isocyanate compound, an isocyanato group in the isocyanate compound is reacted and bonded to a hydroxy group present on the surface-treated side of the electrode, so that a functional group which is based on the structure of the isocyanate compound and which is capable of chemically bonding to the primer layer can be imparted (introduced) to the electrode.

With respect to the isocyanate compound, there is no particular limitation, but examples include multifunctional isocyanates, such as diphenylmethane diisocyanate (MDI), hexamethylene diisocyanate (HDI), tolylene diisocyanate (TDI), and isophorone diisocyanate (IPDI), and isocyanate compounds having a radically reactive group, such as 2-isocyanate ethyl methacrylate (for example, "Karenz MOI (registered trademark)", manufactured by Showa Denko K.K.), 2-isocyanate ethyl acrylate (for example, "Karenz AOI (registered trademark)", and "AOI-VM (registered trademark)", each of which is manufactured by Showa Denko K.K.), and 1,1-(bisacryloyloxyethyl)ethyl isocyanate (for example, "Karenz BEI (registered trademark)", manufactured by Showa Denko K.K.).

### (Thiol compound)

With respect to the thiol compound, a mercapto group in the thiol compound is reacted and bonded to a hydroxy group present on the surface-treated side of the electrode, so that a functional group which is based on the structure of the thiol compound and which is capable of chemically bonding to the primer layer can be imparted (introduced) to the electrode.

With respect to the thiol compound, there is no particular limitation, but examples include pentaerythritol tetrakis(3-mercaptopropionate) (for example, "QX40", manufactured by Mitsubishi Chemical Corporation, and "QE-340M", manufactured by Toray Fine Chemicals Co., Ltd.), ether primary thiol (for example, "Capcure 3-800", manufactured by Cognis Group, Inc.), 1,4-bis(3-mercaptobutylyloxy)butane (for example, "Karenz MT (registered trademark) BD1", manufactured by Showa Denko K.K.), pentaerythritol tetrakis(3-mercaptobutyrate) (for example, "Karenz MT (registered trademark) PE1", manufactured by Showa Denko K.K.), and 1,3,5-tris(3-mercaptobutyloxyethyl)-1,3,5-triazine-2,4,6(1H,3H,5H)-trione (for example, "Karenz MT (registered trademark) NR1", manufactured by Showa Denko K.K.).

### [Method for producing an electrode body]

As mentioned above, the electrode body has at least an electrode and a primer layer or a plurality of primer layers laminated on the electrode. The electrode body can be produced by a method including the step of applying an in-situ polymerizable composition onto the electrode and subjecting the in-situ polymerizable composition to polymerization to form the primer layer or layers. Further, the electrode body can be produced by a method including the step of applying an in-situ polymerizable composition dissolved in a solvent onto the electrode, and permitting the solvent to volatilize and then subjecting the resultant composition to polymerization to form the primer layer or layers.

Further, as mentioned above, the electrode body can further have a functional group-containing layer. The electrode body having an electrode, a functional group-containing layer, and a primer layer or a plurality of primer layers can be produced by a method including the step of forming a functional group-containing layer on the electrode, and the step of applying an in-situ polymerizable composition onto the functional group-containing layer and subjecting the in-situ polymerizable composition to polymerization to form the primer layer or layers. Further, in the method for producing the electrode body having the functional group-containing layer, the step for forming the primer layer or layers can be the step of applying an in-situ polymerizable composition dissolved in a solvent onto the functional group-containing layer, and permitting the solvent to volatilize and then subjecting the resultant composition to polymerization to form the primer layer or layers.

In the method for producing an electrode body, specific embodiments of the electrode body having an electrode, a primer layer or primer layers, and an in-situ polymerizable composition, and specific embodiments of the electrode body having an electrode, a functional group-containing layer, a primer layer or primer layers, and an in-situ polymerizable composition are similar to those of the above-mentioned electrode body.

### <Electrochemical element>

In an embodiment of the present invention, an electrochemical element has the above-mentioned electrode body.

An example of the embodiment of the electrochemical element is described with reference to Fig. 7.

Fig. 7 is a diagrammatic view showing a partial cross-section of the electrochemical element, and an electrochemical element 100 has contained in a container 110 one of an electrolyte 120a and an insulator 120b, and the electrode body 1,
the container 110 having a through-hole through which the electrode body 1 passes,
wherein part of the electrode body 1 extends through the through-hole to the outside of the container,
the container having the sealing material 130 along an edge of the through-hole,
wherein the sealing portion at which the sealing material 130 and the primer layer 30 of the electrode body 1 are joined seals a gap between the through-hole and the electrode body 1.

The electrochemical element is preferably a wet secondary battery, a solid battery, or a capacitor.

When the electrochemical element is a wet secondary battery, a preferred embodiment of the wet secondary battery has contained in the container at least the electrolyte 120a and the electrode body 1, and can further has a separator contained. In the wet secondary battery, as the electrolyte, a known alkali metal salt can be used, and can be appropriately selected according to the type of the active material or the like. Further, in the wet secondary battery, the electrolyte can be used in the form of being dissolved in an organic solvent, an ionic liquid, or the like. With respect to the electrolytic solution having the electrolyte dissolved therein, a single type of electrolytic solution can be used, or two or more types of electrolytic solutions can be used in combination.

When the electrochemical element is a solid battery, a preferred embodiment of the solid battery has contained in the container at least the electrolyte 120a and the electrode body 1. In the solid battery, the electrolyte is a solid electrolyte. With respect to the solid electrolyte, a known solid electrolyte can be used, and examples include an inorganic solid electrolyte and a polymer solid electrolyte, and a solid electrolyte can be appropriately selected from these electrolytes.

When the electrochemical element is a capacitor, a preferred embodiment of the capacitor has contained in the container at least the insulator 120b and the electrode body 1, and can further has a separator contained. The insulator can be appropriately selected from known insulators according to the type of the capacitor, and, for example, glass, a plastic, or a ceramic can be used.

In the electrochemical element, in addition to the above-mentioned electrode body, electrolyte, insulator, and the like, if necessary, an additional constituent material can be appropriately used.

As an example of the sealing material 130 for sealing a gap between the through-hole in the container 110 and the electrode body 1, there can be mentioned a thermoplastic resin.

With respect to the thermoplastic resin, there is no particular limitation.

Examples of thermoplastic resins include polypropylene, polyamide 6, polyamide 66, modified polyphenylene ether, polyphenylene sulfide, polyether imide, polycarbonate, polybutylene terephthalate, polytetrafluoroethylene, and polytetrafluoroethylene.

The sealing portion can be formed by welding the sealing material 130 and the primer layer 30 of the electrode body. In the preferred formation of the sealing portion, the sealing material 130 undergoes a heating melt process to be joined to at least part of the primer layer 30 of the electrode body.

As examples of the heating melt process, specifically, there can be mentioned heating by ultrasonic vibration, frictional heating, radiofrequency induction heating, high-frequency dielectric heating, and heating by irradiation with an infrared ray, and injection welding of a molten resin constituting the sealing material 130 on the primer layer 30 can be employed.

### Examples

Hereinbelow, the present invention will be described in more detail with reference to the following Examples and Comparative Examples, which should not be construed as limiting the scope of the present invention.

### <Production of an electrode body>

### (Electrode)

The electrodes used in the Examples and Comparative Examples are shown below.
- Electrode 1 [electrode material: pure aluminum; shape: cylinder; diameter: 5 mm; length: 30 mm]
- Electrode 2 [electrode material: oxygen free copper; shape: cylinder; diameter: 5 mm; length: 30 mm]

### [Example 1]

### <Surface treatment: Boehmite treatment (Chemical conversion treatment)>

The electrode 1 was subjected to boehmite treatment by immersing the electrode in boiling pure water for 10 minutes and then baking the resultant electrode at 250°C for 10 minutes, forming a surface-treated portion (boehmite film having unevenness in the surface) in the surface of the electrode 1.

The surface of the electrode obtained after the boehmite treatment was observed using a SEM photomicrograph (scanning electron microscope photomicrograph; taken at a tilt angle of 45°), and, as a result, it was found that a boehmite film having whisker-like unevenness in the surface was formed.

### <Formation of a functional group-containing layer: Silane coupling agent treatment>

Then, a silane coupling agent-containing solution obtained by dissolving 2 g of 3-aminopropyltrimethoxysilane ("KBM-903", manufactured by Shin-Etsu Silicone Co., Ltd.; silane coupling agent) in 1,000 g of industrial ethanol was maintained at 70°C, and the electrode obtained after the surface treatment was immersed in the solution for 20 minutes. The electrode was removed and dried to form a functional group (amino group)-containing layer on the surface of the boehmite film.

### <Formation of a primer layer: Difunctional isocyanate compound and diol>

100 g of diphenylmethane diisocyanate (MDI, "Millionate MT", manufactured by Tosoh Corp.), 54.7 g of propylene glycol (PG), and 15.8 g of 4,4'-diaminodiphenylmethane were dissolved in 287 g of acetone to prepare an in-situ polymerizable composition 1.

Then, the electrode having the functional group-containing layer formed thereon was immersed in the obtained in-situ polymerizable composition 1. The immersed electrode was removed, and dried and heated at 160°C for 15 minutes to cause addition polymerization so as to form an in-situ polymerizable composition layer (primer layer) having a thickness of 30 µm, obtaining an electrode body.

### [Example 2]

### <Surface treatment: Abrasion treatment>

The surface of the electrode 1 was polished using #400 sandpaper.

### <Formation of a functional group-containing layer: Silane coupling agent treatment>

A functional group (amino group)-containing layer was formed on the surface of the electrode obtained after the abrasion treatment by performing the same operation as in the formation of a functional group-containing layer in Example 1.

### <Formation of a primer layer: Difunctional isocyanate compound and diol>

Then, by performing the same operation as in the formation of a primer layer in Example 1, using the in-situ polymerizable composition 1, an in-situ polymerizable composition layer (primer layer) having a thickness of 30 µm was formed on the electrode having the functional group-containing layer formed thereon, obtaining an electrode body.

### [Example 3]

### <Surface treatment: Plasma treatment>

The electrode 1 was subjected to plasma treatment at 5 m/minute using atmospheric pressure plasma treatment machine "FG5001", manufactured by Nihon Plasmatreat Inc.

### <Formation of a functional group-containing layer: Silane coupling agent treatment>

A functional group (amino group)-containing layer was formed on the surface of the electrode obtained after the plasma treatment by performing the same operation as in the formation of a functional group-containing layer in Example 1.

### <Formation of a primer layer: Difunctional isocyanate compound and diol>

Then, by performing the same operation as in the formation of a primer layer in Example 1, using the in-situ polymerizable composition 1, an in-situ polymerizable composition layer (primer layer) having a thickness of 30 µm was formed on the electrode having the functional group-containing layer formed thereon, obtaining an electrode body.

### [Example 4]

### <Surface treatment: Boehmite treatment>

A boehmite film was formed on the surface of the electrode 1 by performing the same operation as in the surface treatment in Example 1.

### <Formation of a functional group-containing layer: Silane coupling agent treatment>

A functional group (amino group)-containing layer was formed on the surface of the boehmite film by performing the same operation as in the formation of a functional group-containing layer in Example 1.

### <Formation of a primer layer: Difunctional epoxy compound and diol>

100 g of a bisphenol A epoxy resin (BPA epoxy resin, "EPICLON (registered trademark) 840", manufactured by DIC Corporation), 61.6 g of bisphenol A (BPA), 0.65 g of triethylamine, and 300 g (the mass of the total of the BPA epoxy resin, BPA, and triethylamine) of acetone were mixed to prepare an in-situ polymerizable composition 4 (solution having a solids content of 50% by mass).

Then, the electrode having the functional group-containing layer formed thereon was immersed in the obtained in-situ polymerizable composition 4. The immersed electrode was removed, and dried and heated at 160°C for 30 minutes to cause addition polymerization so as to form an in-situ polymerizable composition layer (primer layer) having a thickness of 100 µm, obtaining an electrode body.

### [Example 5]

### <Surface treatment: Caustic soda method (Etching treatment)>

The electrode 1 was immersed in a 5% by mass aqueous solution of sodium hydroxide at room temperature for 1.5 minutes, and then immersed in a 5% by mass aqueous solution of nitric acid for 3 minutes, and then washed with water.

### <Formation of a functional group-containing layer: Silane coupling agent treatment>

A functional group (amino group)-containing layer was formed on the surface of the electrode obtained after the treatment with caustic soda by performing the same operation as in the formation of a functional group-containing layer in Example 1.

### <Formation of a primer layer: Difunctional epoxy compound and diol compound>

100 g of a bisphenol A epoxy resin (BPA epoxy resin, "jER (registered trademark) 1001", manufactured by Mitsubishi Chemical Corporation), 24.0 g of bisphenol A (BPA), and 0.50 g of triethylamine were dissolved in 240 g of acetone to prepare an in-situ polymerizable composition 5.

Then, the electrode having the functional group-containing layer formed thereon was immersed in the obtained in-situ polymerizable composition 5. The immersed electrode was removed, and dried and heated at 150°C for 40 minutes to cause addition polymerization so as to form an in-situ polymerizable composition layer (primer layer) having a thickness of 50 µm, obtaining an electrode body.

### [Example 6]

### <Surface treatment: Abrasion treatment>

The surface of the electrode 1 was polished by performing the same operation as in the surface treatment in Example 2.

### <Formation of a functional group-containing layer: Silane coupling agent treatment>

A functional group (amino group)-containing layer was formed on the surface of the electrode obtained after the abrasion treatment by performing the same operation as in the formation of a functional group-containing layer in Example 1.

### <Formation of a primer layer: Difunctional epoxy compound and difunctional thiol compound>

100 g of a difunctional epoxy resin (BPA epoxy resin, "jER (registered trademark) 1001", manufactured by Mitsubishi Chemical Corporation), 16.5 g of difunctional thiol compound 1,4-bis(3-mercaptobutylyloxy)butane (difunctional SH, "Karenz MT (registered trademark) BD1", manufactured by Showa Denko K.K.), and 4.6 g of 2,4,6-tris(dimethylaminomethyl)phenol DMP-30 were dissolved in 216 g of toluene to prepare an in-situ polymerizable composition 6.

Then, the electrode having the functional group-containing layer formed thereon was immersed in the obtained in-situ polymerizable composition 6. The immersed electrode was removed, and dried and heated at 170°C for 10 minutes to cause addition polymerization so as to form an in-situ polymerizable composition layer (primer layer) having a thickness of 70 µm, obtaining an electrode body.

### [Example 7]

### <Surface treatment: Plasma treatment>

The surface of the electrode 1 was subjected to plasma treatment by performing the same operation as in the surface treatment in Example 3.

### <Formation of a functional group-containing layer: Silane coupling agent treatment>

A functional group (amino group)-containing layer was formed on the surface of the electrode obtained after the plasma treatment by performing the same operation as in the formation of a functional group-containing layer in Example 1.

### <Formation of a primer layer: Monofunctional radical-polymerizable monomer>

80 g of methyl methacrylate (MMA), 10 g of styrene, 10 g of polymethyl methacrylate, and 1 g of Perbutyl O were mixed to prepare an in-situ polymerizable composition 7.

Then, the electrode having the functional group-containing layer formed thereon was immersed in the obtained in-situ polymerizable composition 7. The immersed electrode was removed and subjected to polymerization by heating at 120°C for 30 minutes to form an in-situ polymerizable composition layer (primer layer) having a thickness of 30 µm, obtaining an electrode body.

### [Example 8]

### <Surface treatment: Cleaning with acetone (Degreasing treatment)>

The surface of the electrode 2 was cleaned with acetone.

### <Formation of a functional group-containing layer: Silane coupling agent treatment>

A functional group (amino group)-containing layer was formed on the surface of the electrode cleaned with acetone by performing the same operation as in the formation of a functional group-containing layer in Example 1.

### <Formation of a primer layer: Difunctional epoxy compound and diol>

Then, by performing the same operation as in the formation of a primer layer in Example 4, using the in-situ polymerizable composition 4, an in-situ polymerizable composition layer (primer layer) having a thickness of 100 µm was formed on the electrode having the functional group-containing layer formed thereon, obtaining an electrode body.

### [Comparative Example 1]

### <Surface treatment: Boehmite treatment>

A boehmite film having whisker-like unevenness in the surface was formed by performing the same operation as in the surface treatment for the electrode 1, obtaining an electrode body.

### [Comparative Example 2]

### <Surface treatment: Boehmite treatment>

A boehmite film having whisker-like unevenness in the surface was formed by performing the same operation as in the surface treatment for the electrode 1.

### <Formation of a functional group-containing layer: Silane coupling treatment>

Then, a functional group (amino group)-containing layer was formed on the surface of the boehmite film by performing the same operation as in the formation of a functional group-containing layer in Example 1, obtaining an electrode body.

### [Comparative Example 3]

### <Surface treatment: Boehmite treatment>

A boehmite film having whisker-like unevenness in the surface was formed by performing the same operation as in the surface treatment for the electrode 1.

### <Formation of a functional group-containing layer: Silane coupling treatment>

Then, a functional group (amino group)-containing layer was formed on the surface of the boehmite film by performing the same operation as in the formation of a functional group-containing layer in Example 1.

### <Formation of a primer layer: Resin after polymerization>

Acetone in the in-situ polymerizable composition 1 used in Example 1 on a release film was permitted to volatilize, and polymerization was completed at 160°C over 20 minutes to obtain a resin. The obtained resin was placed on the surface of the functional group-containing layer and melt-pressed at 160°C to form a resin layer having a thickness of 30 µm, obtaining an electrode body.

### [Comparative Example 4]

### <Surface treatment: Cleaning with acetone>

The surface of the electrode 2 was cleaned with acetone.

### <Formation of a functional group-containing layer: Silane coupling treatment>

Then, a functional group (amino group)-containing layer was formed on the surface of the electrode cleaned with acetone by performing the same operation as in the formation of a functional group-containing layer in Example 1, obtaining an electrode body.

### <Evaluation method>

### (Preparation of a sample)

Each of the electrode bodies obtained in Examples and Comparative Examples above was passed through a through-hole of a flat plate made of aluminum having the through-hole in the center (diameter: 55 mm; through-hole diameter: 20 mm; thickness: 10 mm), and a resin (sealing material), i.e., polyamide 6 (PA6), polybutylene terephthalate (PBT), or polyphenylene sulfide (PPS) was subjected to insert injection molding under the conditions shown in Table 3 using an injection molding machine (machine name "Si-100-6s", manufactured by Toyo Machinery & Metal Co., Ltd.) and a mold so as to seal a gap between the electrode body and the through-hole, joining the electrode body and the sealing material.

### (Helium leak test)

The thus obtained electrode body joined and unified with the flat plate was inserted into helium leak tester CLT (COMPACT-ALT) CLT series, manufactured by ULVAC, Inc., to perform a helium leak test. The adhesion between the electrode body and the sealing material was evaluated in accordance with the following criteria for evaluation. The results of the evaluation were shown in Tables 1 and 2.

### <Criteria for evaluation>

A: Leakage is less than 10E-11 Pa•m³/s.
B: Leakage is 10E-11 Pa•m³/s or more.

### [Table 1]

**Table 1**

| | | Example 1 | Example 2 | Example 3 | Example 4 | Example 5 | Example 6 | Example 7 | Example 8 |
|---|---|---|---|---|---|---|---|---|---|
| Electrode | | Electrode 1 | Electrode 1 | Electrode 1 | Electrode 1 | Electrode 1 | Electrode 1 | Electrode 1 | Electrode 2 |
| Surface treatment | | Boehmite | Abrasion | Plasma | Boehmite | Caustic soda | Abrasion | Plasma | Acetone |
| Functional group-containing layer | | KBM-903 | KBM-903 | KBM-903 | KBM-903 | KBM-903 | KBM-903 | KBM-903 | KBM-903 |
| Primer layer | | MDI + PG | MDI + PG | MDI + PG | BPA Epoxy + BPA | BPA Epoxy + BPA | BPA Epoxy + Difunctional SH | MMA | BPA Epoxy + BPA |
| Thickness [µm] | | 30 | 30 | 30 | 100 | 50 | 70 | 30 | 100 |
| | | | | | | | | | |
| Helium leak test | | | | | | | | | |
| Sealing material | PA6 | A | A | A | A | A | A | A | A |
| | PPS | A | A | A | A | A | A | A | A |
| | PBT | A | A | A | A | A | A | A | A |

### [Table 2]

**Table 2**

| | | Comparative Example 1 | Comparative Example 2 | Comparative Example 3 | Comparative Example 4 |
|---|---|---|---|---|---|
| Electrode | | Electrode 1 | Electrode 1 | Electrode 1 | Electrode 2 |
| Surface treatment | | Boehmite | Boehmite | Boehmite | Acetone |
| Functional group-containing layer | | - | KBM-903 | KBM-903 | KBM-903 |
| Primer layer | | - | - | In-situ polymerizable resin composition 1 after polymerization | - |
| | Thickness [µm] | - | - | 30 | - |
| | | | | | |
| Helium leak test | | | | | |
| Sealing material | PA6 | B | B | B | B |
| | PPS | B | B | B | B |
| | PBT | B | B | B | B |

### [Table 3]

**Table 3**

| Resin | Manufacturer | Trade name | Cylinder temperature | Mold temperature | Injection speed | Holding pressure | Cooling time |
|---|---|---|---|---|---|---|---|
| | | | [°C] | [°C] | mm/sec | [MPa/sec] | [sec] |
| PA6 | DSM | Novamid (registered trademark) | 270 | 80 | 50 | 100/4 | 15 |
| PPS | DIC | FZ-2140 | 310 | 140 | 50 | 100/3 | 15 |
| PBT | SABIC | Valox (registered trademark) 507 | 270 | 100 | 65 | 120/5 | 15 |

From the results that the evaluation for helium leak test in Examples 1 to 8 is excellent, it is found that when the electrode body has the primer layer having the in-situ polymerizable composition layer, the electrode body and the sealing material are firmly joined and unified, achieving excellent adhesion.

### Industrial Applicability

The electrode body of the present invention is advantageous in that the adhesion of the primer layer of the electrode body to a resin (for example, a thermoplastic resin) used in a sealing material for an electrochemical element is excellent. Therefore, the electrode body of the present invention can be used in electrochemical elements, such as a wet secondary battery, a solid battery, and a capacitor.

### Reference Signs List

1: Electrode body
10: Part of electrode body
20: Electrode
21: Very fine unevenness
30: Primer layer
31: In-situ polymerizable composition layer
32: Thermosetting resin layer
40: Functional group-containing layer
100: Electrochemical element
110: Container
120: Electrolyte 120a or Insulator 120b
130: Sealing material

## Claims

1. An electrode body having an electrode, and a primer layer or a plurality of primer layers laminated on the electrode,
wherein the at least one primer layer is an in-situ polymerizable composition layer formed from a polymerization product of an in-situ polymerizable composition.

2. The electrode body according to claim 1, wherein the in-situ polymerizable composition contains at least one member of the following (1) to (7):
(1) a combination of a difunctional isocyanate compound and a diol,
(2) a combination of a difunctional isocyanate compound and a difunctional amino compound,
(3) a combination of a difunctional isocyanate compound and a difunctional thiol compound,
(4) a combination of a difunctional epoxy compound and a diol,
(5) a combination of a difunctional epoxy compound and a difunctional carboxy compound,
(6) a combination of a difunctional epoxy compound and a difunctional thiol compound, and
(7) a monofunctional radical-polymerizable monomer.

3. The electrode body according to claim 1 or 2, which has a functional group-containing layer between the electrode and the primer layer,
wherein the functional group-containing layer contains at least one functional group selected from the group consisting of the following (a) to (g):
(a) at least one functional group which is derived from a silane coupling agent, and which is selected from the group consisting of an epoxy group, an amino group, a (meth)acryloyl group, and a mercapto group,
(b) a functional group obtained by reacting at least one member selected from an epoxy compound and a thiol compound with an amino group derived from a silane coupling agent,
(c) a functional group obtained by reacting at least one member selected from the group consisting of an epoxy compound, an amino compound, an isocyanate compound, a compound having a (meth)acryloyl group and an epoxy group, and a compound having a (meth)acryloyl group and an amino group with a mercapto group derived from a silane coupling agent,
(d) a functional group obtained by reacting a thiol compound with a (meth)acryloyl group derived from a silane coupling agent,
(e) a functional group obtained by reacting at least one member selected from the group consisting of a compound having an amino group and a (meth)acryloyl group, an amino compound, and a thiol compound with an epoxy group derived from a silane coupling agent,
(f) an isocyanato group derived from an isocyanate compound, and
(g) a mercapto group derived from a thiol compound.

4. The electrode body according to any one of claims 1 to 3, wherein the primer layer or layers have a total thickness of 1 to 500 µm.

5. The electrode body according to any one of claims 1 to 4, wherein the electrode is a metal electrode.

6. A method for producing an electrode body having an electrode and a primer layer or a plurality of primer layers laminated on the electrode,
the method comprising the step of applying an in-situ polymerizable composition onto the electrode and subjecting the in-situ polymerizable composition to polymerization to form the primer layer or layers.

7. A method for producing an electrode body, the method comprising the step of forming a functional group-containing layer on an electrode, and the step of applying an in-situ polymerizable composition onto the functional group-containing layer and subjecting the in-situ polymerizable composition to polymerization to form a primer layer or a plurality of primer layers,
wherein the functional group-containing layer contains at least one functional group selected from the group consisting of the following (a) to (g):
(a) at least one functional group which is derived from a silane coupling agent, and which is selected from the group consisting of an epoxy group, an amino group, a (meth)acryloyl group, and a mercapto group,
(b) a functional group obtained by reacting at least one member selected from an epoxy compound and a thiol compound with an amino group derived from a silane coupling agent,
(c) a functional group obtained by reacting at least one member selected from the group consisting of an epoxy compound, an amino compound, an isocyanate compound, a compound having a (meth)acryloyl group and an epoxy group, and a compound having a (meth)acryloyl group and an amino group with a mercapto group derived from a silane coupling agent,
(d) a functional group obtained by reacting a thiol compound with a (meth)acryloyl group derived from a silane coupling agent,
(e) a functional group obtained by reacting at least one member selected from the group consisting of a compound having an amino group and a (meth)acryloyl group, an amino compound, and a thiol compound with an epoxy group derived from a silane coupling agent,
(f) an isocyanato group derived from an isocyanate compound, and
(g) a mercapto group derived from a thiol compound.

8. The method for producing an electrode body according to claim 6 or 7, wherein the in-situ polymerizable composition contains at least one member of the following (1) to (7):
(1) a combination of a difunctional isocyanate compound and a diol,
(2) a combination of a difunctional isocyanate compound and a difunctional amino compound,
(3) a combination of a difunctional isocyanate compound and a difunctional thiol compound,
(4) a combination of a difunctional epoxy compound and a diol,
(5) a combination of a difunctional epoxy compound and a difunctional carboxy compound,
(6) a combination of a difunctional epoxy compound and a difunctional thiol compound, and
(7) a monofunctional radical-polymerizable monomer.

9. The method for producing an electrode body according to any one of claims 6 to 8, wherein the primer layer or layers have a total thickness of 1 to 500 µm.

10. The method for producing an electrode body according to any one of claims 6 to 9, wherein the electrode is a metal electrode.

11. An electrochemical element having the electrode body according to any one of claims 1 to 5.

12. The electrochemical element according to claim 11, which has contained in a container one of an electrolyte and an insulator, and the electrode body,
wherein the container has a through-hole through which the electrode body passes,
wherein part of the electrode body extends through the through-hole to the outside of the container,
the container having a sealing material along an edge of the through-hole,
wherein a sealing portion at which the sealing material and the primer layer of the electrode body are joined seals a gap between the through-hole and the electrode body.

13. The electrochemical element according to claim 12, wherein the sealing material has undergone a heating melt process to be joined to at least part of the primer layer of the electrode body.

14. The electrochemical element according to claim 12 or 13, wherein the sealing material is a thermoplastic resin.

15. The electrochemical element according to any one of claims 11 to 14, which is a wet secondary battery, a solid battery, or a capacitor.
